Europäisches Patentamt

European Patent Office

Office européen des brevets

(11) Publication number: **0 235 289 B1**

# EUROPEAN PATENT SPECIFICATION

(45) Date of publication of patent specification: **01.07.92** (51) Int. Cl.5: **B01D 9/02**, B30B 9/04

(21) Application number: **85904853.0**

(22) Date of filing: **18.09.85**

(86) International application number:
**PCT/JP85/00520**

(87) International publication number:
**WO 87/01605 (26.03.87 87/07)**

(54) **HIGH-PRESSURE CRYSTALLIZER.**

(43) Date of publication of application:
**09.09.87 Bulletin 87/37**

(45) Publication of the grant of the patent:
**01.07.92 Bulletin 92/27**

(84) Designated Contracting States:
**BE CH DE FR GB IT LI NL SE**

(56) References cited:
| FR-A- 2 140 235 | JP-A-54 158 376 |
| JP-A-60 193 501 | JP-A-60 193 502 |
| US-A- 2 346 018 | US-A- 3 190 450 |

(73) Proprietor: **KABUSHIKI KAISHA KOBE SEIKO SHO**
**3-18, Wakinohamacho 1-chome Chuo-ku Kobe-shi Hyogo-ken 651(JP)**

(72) Inventor: **MORITOKI, Masato**
**3-11-6, Midorigaoka-cho Higashi Miki-shiöHyogo-ken 673-05(JP)**
Inventor: **KITAGAWA, Kazuo**
**2-3-9, NishimaikoöTarumi-ku Kobe-shiöHyogo-ken 665(JP)**

(74) Representative: **Wright, Hugh Ronald et al Brookes & Martin 52/54 High Holborn London WC1V 6SE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a pressure separation apparatus for solidifying at least one component of a liquid at high pressures, such as 500atms or more, and more particularly to equipment for use in separating the solidifying component from the mother liquid.

## BACKGROUND OF THE INVENTION

There have been proposed many chemical methods for separating one component from a mixture of two or more components present in a liquid state or in a slurry state (hereinafter referred to as the liquid mixture). However the conventional methods are not effective to separate one particular component from others when the components are eutectic or form a solid solution, where the components are so similar in chemical and physical properties that they are difficult to separate.

As a result the common practice is to effect the separation of components by means of temperature, which will be referred to as thermal separation. This includes a cooling method under which a particular component is separated at its freezing point from the others.

However thermal separation has some disadvantages; for example, (1) it is difficult to control the temperature, (2) temperature gradients are likely to occur in the system, thereby lacking thermal equilibrium, and (3) the time required for thermal separation.

An alternative method which has been proposed for such separation is a method relying upon pressure rather than temperature.

When the pressure separation method is operated for commercial purposes, particularly using large-scale equipment, new problems have arisen. One of them is how to discharge the liquid phase out of the system under a high pressure when the liquid and solid phases co-exist as a mixture therein.

Solid crystals are formed at the high pressures used by the pressure separation method, whereas as the pressure is decreased the crystals melt and become soft. In the known apparatus for carrying out pressure separation, a cylindrical high-pressure vessel is used, which is provided with a filter on its inside wall. Behind the filter the system communicates with the atmosphere through a valve when it is intended to allow liquid and solid phases to co-exist. There are many variations of this apparatus.

In operation a mixture in a liquid state is put in the vessel; communication with the atmosphere is cut off and the liquid discharge is closed, which means that the vessel is completely closed; a high pressure is applied to the mixture in the vessel; if necessary, the temperature is reduced. In this way one component is segregated in the mixture, thereby producing a state in which the solidified component and the remaining liquid co-exist. Then the valve is opened so as to withdraw the liquid component, which is forced out through the filter by gradually applying pressure to the mixture in the vessel. The pressure continuously applied to the remaining solid phase squeezes it through the filter.

In this way a very pure component remains in the vessel.

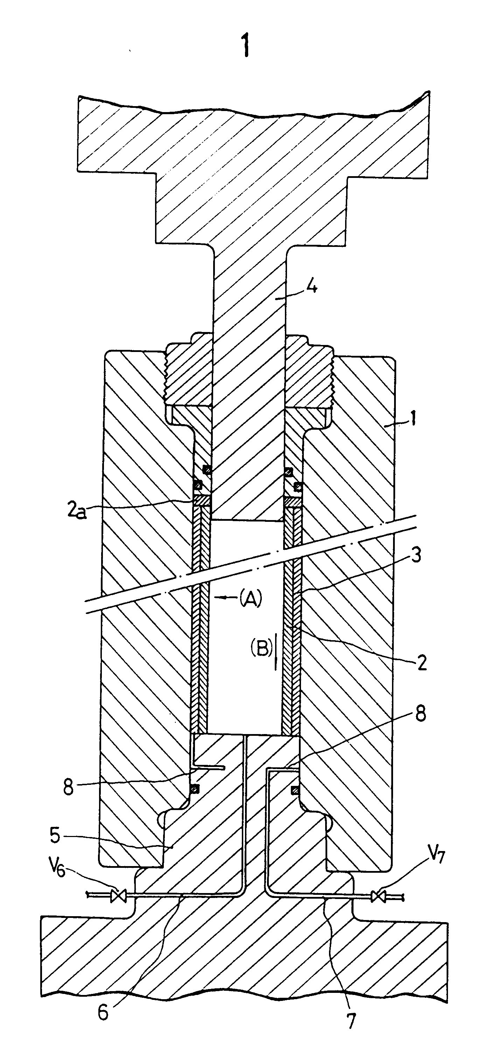

Reference will be made to Figure 1, which shows an example of a conventional high-pressure vessel. The vessel 1 has a filter 2, an insulating material 3, a piston 4, a block 5, a mixture supply pipe 6, and a discharge pipe 7.

The steps taken to operate the illustrated vessel are as follows:

(1) A valve V7 is closed and the valve V6 is opened so as to allow the mixture to enter the vessel 1;

(2) After the supply of mixture is completed the valve V6 is closed, and the piston 4 is lowered, thereby increasing the pressure upon the mixture in the vessel. In this way the solidification of a particular component is promoted;

(3) After the solidification of one component is finished the valve V7 is opened and the subsequent filtering and squeezing start; that is, first, the liquid component in the vessel is squeezed, and caused to pass through the filter. The liquid component passes through a path 8, and is discharged through the pipe 7 via the valve V7; and

(4) After the filtering and squeezing are finished, the vessel 1 is opened, thereby collecting the solid cake at atmospheric pressure or alternatively, melting it after collection.

In the process (3) mentioned above the filter 2 is subjected to pressures as high as 500 atms or more, sometimes a few thousands atms, in the direction of arrow (A), that is, perpendicular to the filter surface. In addition, as the squeezing advances, the filter surface is subjected to a frictional force by the squeezing of the solid cake wherein the frictional force acts on the filter surface in the direction of arrow (b), that is, in the axial direction. Furthermore, a differential pressure between the high internal pressure acting on the upper ring 2a and a possible atmospheric pressure thereunder affects the filter surface. Owing to these combined factors the filter is in danger of compressible deformation in the direction of arrow (b), and sometimes in danger of expanding deformation in the direction of arrow (A); sometimes, the filter breaks owning to the expanding deformation when the filter is made of a sintered metal (SUS or the like) having a simple structure. It often happens that the pores in the filter are crushed and clogged, thereby losing its filtering ability.

As described above the conventional filtrate separation method has a great disadvantage in that it can cause filter fracture and or lost filtering ability. This leads to a reduced efficiency in the form of low yields or reduced purity of a collected component.

In order to alleviate some of the difficulties mentioned above the inventors have made an invention for which a Japanese patent application No. 59(1984)40108 has been filed. In this invention the upper portion of the inside wall of the filter is fixed to the ring, and the filter is backed up by a reinforcement and fixed at a given place in the vessel so as to protect the filter against the axial deformation.

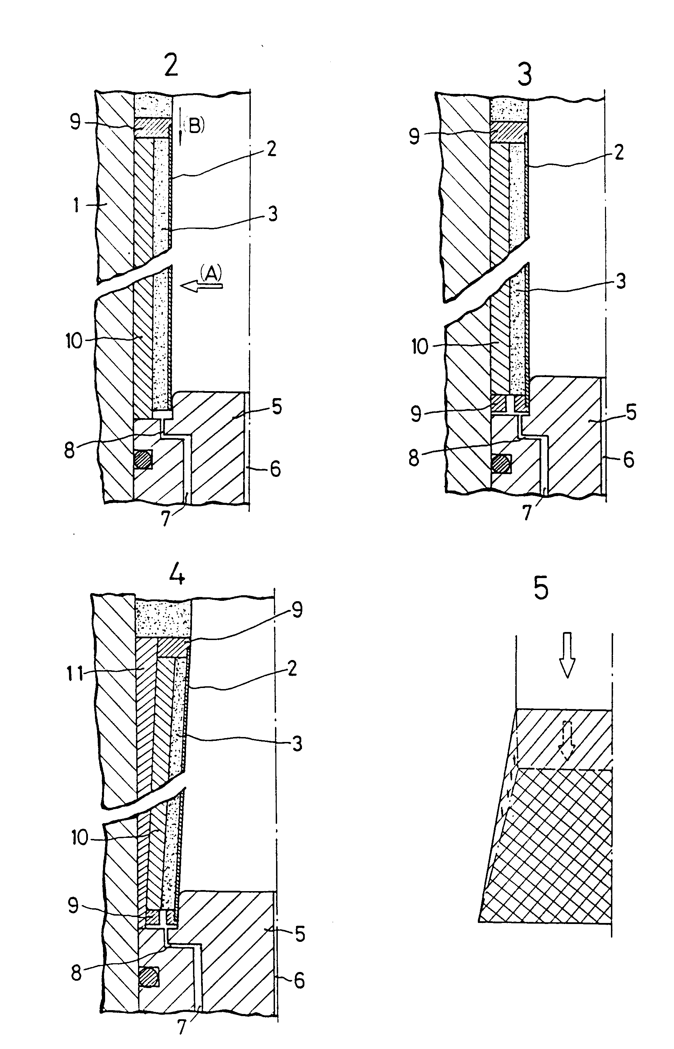

As is shown in Figure 2 the entire structure is substantially the same as the embodiment of Figure 1. A ring 9 is fitted in a space above the filter 2 and a cylindrical reinforcement 10 is provided behind the filter 2 through an insulating material 3. The reinforcement 10 is so constructed that its length can be adjusted in accordance with the axial length of the filter so as to locate the upper ring 9 at a desired position. The reinforcement 10 can be cylindrical when the insulating material 3 is interposed against the filter 2 or vertically split to facilitate attachment and detachment. The insulating material 3 is made of a material which permits the liquid to pass therethrough towards the discharge path 8. When no insulating material 3 is interposed, it is necessary to provide a vertical split whereby the liquid is permitted to flow after having passed through the filter 2.

The size of the slit must be determined so as to reinforce the filter structure in the axial and radial directions. It is possible to make the ring 9 integral with the reinforcement 10.

In this way the filter 2 is fixed at a particular place with the ring 9 and reinforcement 10, and if it is additionally backed up by the reinforcement 10 the filter 2 is protected against the deformation in the directions of arrows (A) and (B) and against its pores being crushed or expanded. Thus high yield and high purity of a collected liquid are ensured. Because the filter 2 is protected against becoming damaged the fequency of replacing the filter with a new one is considerably reduced.

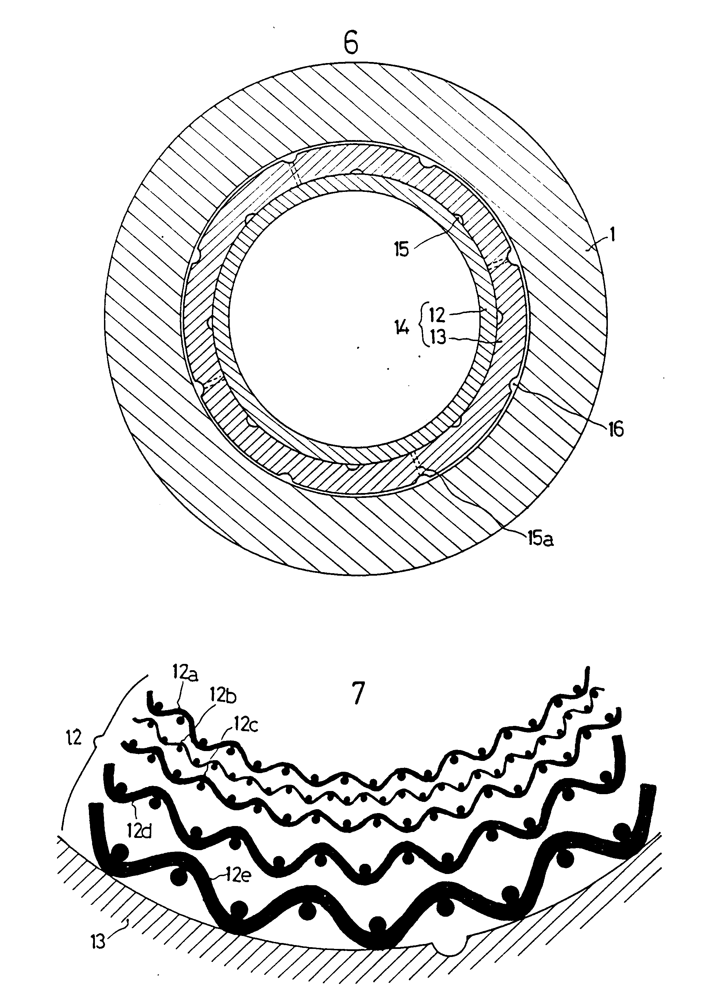

Figure 3 shows another embodiment of the previous invention, which is characterized in that the filter 2 is fixed at its upper and lower ends by means of rings 9 with the reinforcement 10 interposed therebetween. Owing to the rings provided at both ends the filter 2 is safely protected against compressive and expanding deformation.

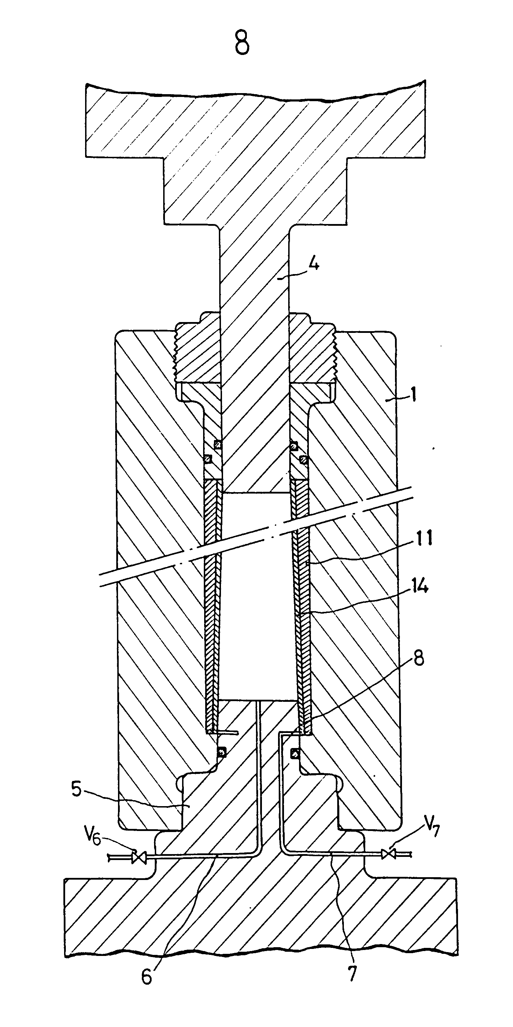

Figure 4 shows a further embodiment. In this example the cylindrical filter 2 has a progressively divergent wall, that is, a tapered wall. The reinforcement 10 and the insulating material 3 are similarly shaped, and they are provided between the upper and lower rings 9, with a spacer 11 being provided in the outermost layer. The spacer 11 is cotter-shaped in cross-section (frusto-conical) as shown in Figure 4.

In order to prevent the filter from becoming deformed along its circumference it is necessary to minimize the space between the insulating material 3 and the reinforcement 10 located behind the filter 2. In the examples shown in Figures 1, 2 and 3 where the filter 2 is purely cylindrical, eliminating the space is almost impossible when the necessity of inserting the filter is taken into consideration.

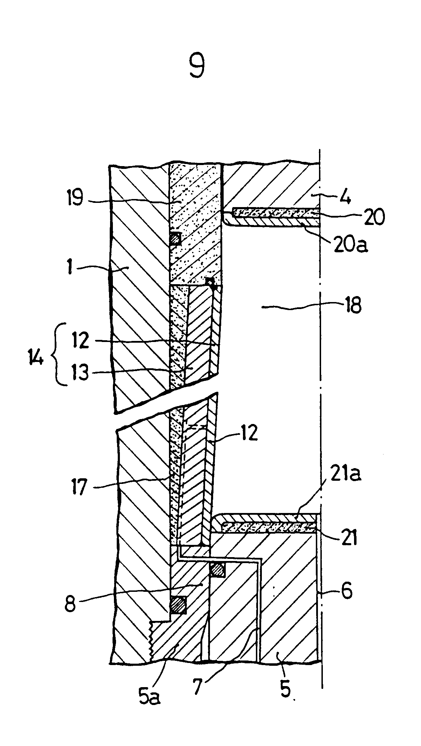

The embodiment shown in Figure 4 has solved this difficulty. Since the spacer 11 is wedge shaped it can place the reinforcement 10 into tight contact with the back of the filter 2 to the extent that there is no space therebetween. Thus the filter is prevented from becoming deformed in a radial direction. When the filter 2 is to be removed the block 5 has only to be pushed downward. In the process of squeezing, the filter 2 is subjected to a downward frictional force. As shown in Figure 5 (the straight line shows a presqueezing state and the broken line shows a during squeezing state) the solid cake is subjected to a force whereby it is urged to separate from the inner surface of the filter 2, which means that the friction lessens. The solid cake is squeezed when it is in the state shown by the broken line in Figure 5 and is thereby subjected to a series of buckling fractures during which liquid paths are produced inside the cake, thereby facilitating the separation of liquid and solid.

In the embodiments mentioned above, the filter is made of sintered metal, but the material is not limited thereto: mono- or multilayer metal net, a porous plate, a laminated sintered metal, a piece of canvas or a combination can be selected in accordance with the pressure and the nature of the material to be treated.

The results of the research conducted prior to the present invention have been described as the background of the present invention. The contents of the research have not yet been published and is not available to the public. Using the new pressure separation method the filter has sometimes fractured and clogging has occured. There has been a strong demand for a yet further improved pressure separation method and equipment.

The next problem is how to control the temperatures during the operation.

The pressure separation method uses pressure as a variable, but heat is unavoidably generated and it is necessary to control the temperatures so as to minimize the influence of heat. In order to carry out the pressure separation method efficiently, it is essential to control the likely rise in temperature during the course of operation. One solution is to fill the vessel with a cooled mixture. However in the processes (2) and (3), heat is likely to be generated and the temperature in the vessel rises by 10 degrees or more. The wall of the vessel has such a large heat capacity that the heat generated is absorbed in the wall, thereby restraining a further rise in the temperature. As the heat radiates, the temperature lowers. As a result there arises a temperature gradient in the vessel, which results in uneven segregation. In such situations the collected liquid component is likely to crystallize in large quantity on or around the filter and/or in the discharge path, thereby preventing the smooth separation of liquid and solid components. There is another solution, that is, the pressure in the vessel is slightly reduced so as to melt the crystals of lower purity, and enhance the purity of the collected solid component. When the pressure is reduced in this way, the treated substances tend to have lower temperatures than the filter and the inside wall of the vessel, which leads to the collection of an excessive amount of solid phase.

The temperature gradient is an important problem in that (1) it is likely to impair the purity of a collected component because of a possible segregation of other than the desired component, (2) the discharge path is likely to become clogged, thereby reducing the performance of the filter, and (3) the crystals of the particular component is likely to melt, thereby resulting in a reduced yield.

The above-mentioned problems are amplified by daily and seasonal changes in temperature which affect the temperature of the vessel, thereby requiring a strict control of the temperature of the vessel.

However the control of temperature is very complicated, and is labour and money-consuming. In addition, the vessel unavoidably has a large heat capacity because of its construction of thick metal. This makes the control of temperature difficult. One solution is that the vessel is constructed such that heat transfer between the wall of the vessel and the inside thereof is minimized. The embodiments shown in Figures 1 to 4 have achieved this solution to some extent.

Another difficulty is how to collect solid cakes remaining in the vessel after the filtering and squeezing have been finished. When the vessel is purely cylindrical having an equal diameter along its entire length, a high pressure such as 500atms or more than 1,000atms act on the inside of the filter. Such a high pressure can break not only the inside of the filter but also expand the wall of the vessel. Under this situation the particular component to be collected is tightly packed in a solid cake in the vessel after the squeezing has been finished. At this stage the piston is raised so as to release the bottom of the vessel from the high pressure and restore a normal atmospheric pressure in the vessel. Then the piston is again lowered so as to push the solid cake. However, when the pressure is reduced to the normal pressure as mentioned above, the wall of the vessel tends to restore to its original smaller size. As a result the solid cake is tightly gripped along its circumference, thereby placing it into tight contact with the inside surface of the filter. In this situation if the solid cake is too strongly pushed by the piston toward the bottom of the vessel, a large friction force acts in between the solid cake and the filter, thereby damaging the inside surface of the filter. Thus the life of the filter is shortened. Frequent replacement will be necessary. To solve this problem one way is to use a thick filter, which, however, leads to a high cost. In this respect the embodiment of Figure 4 has been found effective.

There is a further problem encountered in the separation of a liquid component from the liquid/solid mixture:

The liquid component is kept at a high pressure, and when it is discharged to a low-pressure side through the filter and the discharge pipe, there arises a sudden drop in pressure, which is transferred to the solid phase in the vessel. As a result the solid phase begins to melt, thereby reducing the working efficiency. Therefore it is necessary to keep the high pressure in the vessel as long as possible. One way is to provide a pressure buffering chamber such as a hatch. On the basis of this idea there has been proposed (1) a method using a pump connected to a high-pressure side, whereby the high-pressure liquid is pumped as it is at the high pressure from the solid phase, and then it is withdrawn to the low pressure side, or alternatively, (2) a method of placing an anti-pressure device of the same type and size as the pressure separation equipment at a place adjacent thereto. As is evident from the description these methods are disadvantageous in being costly and complicated.

At any rate it is difficult to remove a high-pressure liquid content to a low-pressure side while the liquid is being kept at the high pressure, and it is necessary to develop equipment achieving this difficult task.

In association with the above-mentioned difficulty there is a problem of clogging in the discharge path owing to the high-pressure unavoidable acting on the discharge path thereby to produce crystals under the influence of the pressure. when the clogging occurs in the discharge path it is necessary to melt and remove the crystals by an extra step. This is also a time and labour-consuming work. The regular course

4

from supply of material to discharge of the product takes a few minutes, and in normal operation the process is continuously repeated day and night. If the discharge path clogs, the regular course of operation is broken. The working efficiency is considerably reduced. In order to solve this problem one solution is to heat the entire equipment to a certain temperature. This requires a lot of heat energy, which is reflected in high production cost. In addition if heat is added to the total equipment it must be covered with an insulating material so as to retain the heat, thereby making it difficult to observe from the outside. For example it is difficult to inspect a liquid leak in the couplings or joints in the equipment.

Our previously published Japanese Patent Specification JP-A-54-158376 discloses a method and apparatus for separating a material from a solution by crystallization of the material in a liquid solute under pressure. In particular it describes apparatus comprising a pressure vessel arranged to contain the solution, means of supplying the solution to the pressure vessel, and extracting a solute from the pressure vessel, means for compressing the solution in the pressure vessel to cause the crystallization, and filter means arranged to retain the separated material in the pressure vessel while the solute is extracted.

As discussed, these previously proposed separation methods and the apparatus for carrying them out have experienced problems. It is the main object of the present invention to further alleviate the problems of previous filters which have arisen from the outward pressure experienced over the surface of the filter element causing the filter element to expand and fail circumferentially, while maintaining axial strength in the filter element.

Accordingly, the present invention provides apparatus for use in separating a required material from a mother liquid including at least the required material, by crystallization of that material in the liquid under high pressure, and then separating the crystallized required material from the liquid, comprising:-

a generally cylindrical pressure vessel having means for supplying the solution to the vessel; piston means for raising the pressure of liquid and material therein to a level sufficient to cause crystallization of the material to be separated; and means for discharging the liquid from the pressure vessel;

filter means disposed around the inner surface of the cylindrical wall of the pressure vessel and arranged to retain crystallized material in the pressure vessel while allowing the liquid to pass through to be extracted from the pressure vessel; and

passage means for the flow of liquid from the outside of the filter means to the means for discharging it from the pressure vessel;

characterised in that said filter means comprises a filter element sleeve and a reinforcing sleeve for the filter sleeve; the reinforcing sleeve is formed with a flow path (15a) for mother liquid to be discharged from the filter element sleeve and is a close fit within the cylindrical wall of the pressure vessel so that radial expansion of the filter means under said high pressure when in use is resisted by the wall of the pressure vessel; said filter element sleeve is formed with an innermost metal mesh filter layer and one or more outer metal mesh filter support layers said metal mesh layers being attached together substantially over the whole filter surface by sintering their meshes together; and in that said filter sleeve element is axially fixed in said reinforcing sleeve.

Subsidiary objects of preferred embodiments of the invention include, the easy removal of the resulting filter cake from the filter element, the control of temperature during the operation of the apparatus and the maintenance of pressure within the apparatus while liquid is discharged from the apparatus, all while maintaining the primary object of the invention.

In order to promote a fuller understanding of the above and other aspects of the present invention, some embodiments will now be described by way of example only with reference to Figures 6 to 13 of the accompanying drawings in which:-

Figure 1 is a vertical cross-section through an earlier pressure separation equipment made by the inventors of the present application and discussed above;

Figure 2 is a vertical cross-section showing the filter structure shown in Figure 1;

Figures 3 and 4 each are modified versions of the pressure separation equipment of Figure 1, each corresponding to Figure 2;

Figure 5 is an explanatory view exemplifying the process of squeezing using the equipment of Figure 4;

Figure 6 is a horizontal cross-section showing a filter structure used in the pressure separation equipment;

Figure 7 is a horizontal cross-section through a pressure separation equipment embodying the present invention;

Figure 8 is a vertical cross-section showing the filter structure used in the pressure separation equipment of the present invention;

Figure 9 is a vertical cross-section showing an embodiment including an insulating layer;

Figure 10 is an explanatory view exemplifying a discharge path including a nozzle arrangement;

Figure 11 is a cross-section on a larger scale of the nozzle arrangement of Figure 10;

Figure 12 is a vertical cross-section showing an embodiment including a heating element in the discharge path; and

Figure 13 is a vertical cross-section showing an embodiment including a heating element in the pressure gauge.

DESCRIPTION OF THE PREFERRED EMBODIMENT

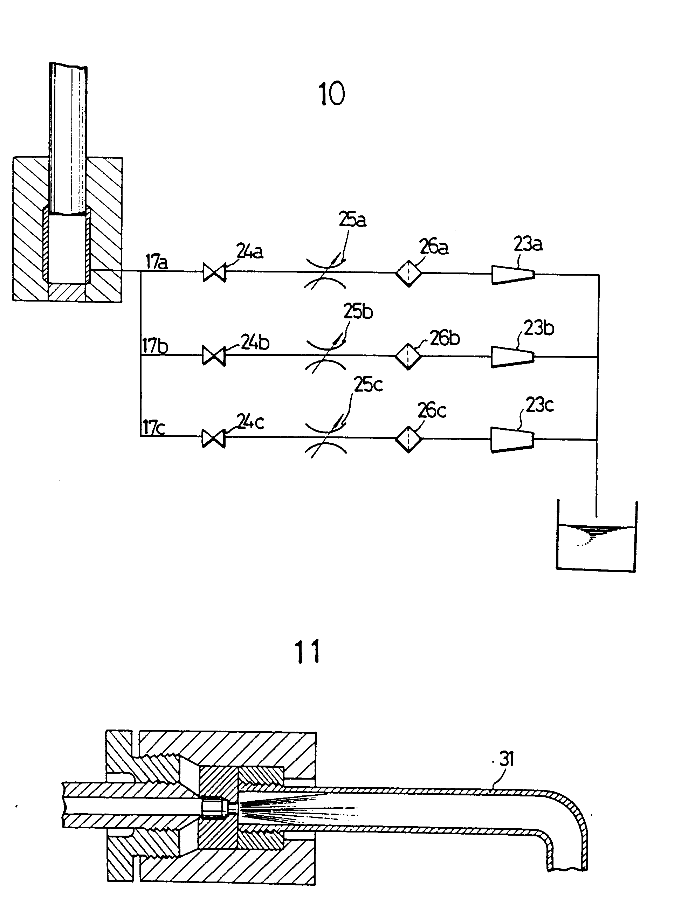

Referring to Figure 6 the pressure segregation equipment of the present invention includes a cylindrical metal mesh layer structure 12, and a cylindrical reinforcement 13 provided concentrically of the mesh layer structure 12 so as to back it up. The two members 12 and 13 and joined to each other at least at their opposite ends, and preferably a solid phase diffusion joint layer is interfacially provided therebetween, and the two members 12 and 13 will be referred to jointly as the filter structure 14. The filter structure 14 is fixed axially and radially on the wall of a vessel 1. The filter structure 14 can be fixed in a known manner; for example, by means of rings 9 shown in Figures 3 and 4. In the radial direction, or filter structure 14 is kept in contact with the inside surface of the vessel 1 with a minimum gap such as 0.1mm or less.

The filter structure 12 is intended to allow a liquid to pass from inside to outside, and the liquid is collected at the bottom of the vessel 1 for discharge out of the equipment. A more detailed description will be given below:

The filter structure 14 includes two or more cylinders of metal net arranged concentrically, preferably each net having different mesh size for example, the inner cylinder having a fine mesh whereas the outer one having a course mesh, and when three cylinders are used, the middle one has a finer mesh. The cylinders are firmly fixed to each other so as to withstand a stress axially acting thereon, thereby avoiding a possible interfacial displacement. However it is necessary to allow gaps to exist in between the adjacent cylinders in that the gaps are necessary to allow the liquid to pass through, wherein the gaps are produced owing to the wavy forms of the individual wires constituting the metal mesh. The metal net cylinders are jointed to each other by sintering, and the sintering conditions, such as sintering pressure and temperature, are determined in accordance with the diameter of the constituent wires, the mesh size, the nature of the material.

The reinforcement 13 is designed to support the metal net cylinder 12 so that the cylinder is protected against an axial and radial force acting thereon. The reinforcement 13 is made by cutting a metal block and is provided with a path allowing a liquid to pass through, the path leading from the inside surface to the outside surface and communicating with a discharge pipe. It is preferred that the diameter of the reinforcement is such as to allow a small gap to be present against the inner wall of the vessel.

As described above it is essential to joint the metal mesh layer structure 12 and the reinforcement 13 so firmly as to withstand an axial force and a radial force acting thereon, and in order to secure the joint they can be soldered to each other in place along the lengths thereof. Thus they are protected against a possible fracture or displacement. A solid phase diffusion bond is preferred, which can be effected by sintering. The diffusion sometimes spreads to cover the liquid paths mentioned above, and to avoid it grooves 15 are formed axially or circumferentially. The grooves can guide the liquid from inside the structure 12 into second grooves 16 by way of by-passes 15a. Finally the liquid can be discharged in the same manner as mentioned above with reference to Figure 1. In the illustrated embodiment the grooves 15 and 16 are produced in the reinforcement 13, but can be formed in the vessel 1.

It is important to locate the two members 12 and 13 exactly with respect to the vessel 1. The small gap between the reinforcement 13 and the vessel 1 is helpful to maintain them in the radial direction. In the axial direction a spacer (not shwn) can be provided so that the heights of the vessel 1 and the reinforcement 13 are made equal. If either member is dislocated with respect to the other they are liable to radial or axial stress possibly acting thereon owing to the high pressure, thereby damaging the equipment and/or endangering the operator engaged in operating the equipment.

The exact location of the filter structure 14 is important in that the space defined by the filter structure must be concentric of the shaft of the piston. Another consideration is that the filter structure tends to expand radially. To avoid the radial expansion the filter structure 14 is placed in contact with the inner wall of the vessel 1 with the minimum space interposed therebetween so as to stop the filter from expanding outside. When the pressure is withdrawn the filter 14 contracts thereby to grip and wring the solid cake, but under the structure of the present invention this problem is avoided or minimized. For this purpose the space between the filter structure and the vessel is preferably 0.1mm or less. The embodiment shown in Figure 4 is effective to achieve this purpose, that is, the filter structure 14 is tapered with a cotter-like spacer interposed between the filter and the vessel so as to tighten the filter structure or alternatively the vessel is tapered whereas the outside of the filter is shaped like a truncated cone, so that the vessel and filter are arranged concentrically so as to be complementary with each other. Either can be adopted.

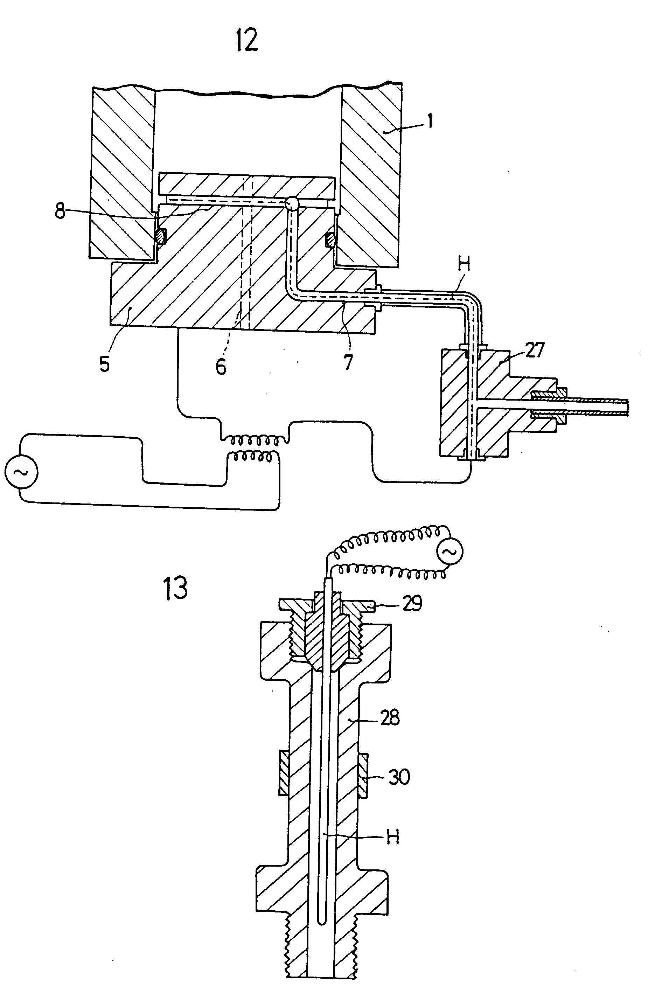

Figure 8 shows an example of the equipment for achieving the above mentioned purpose. The vessel 1 is provided with a spacer 11 having a tapered wall, and a filter structure 14 having an equally tapered wall so that the filter structure 14 is exactly and firmly located with respect to the vessel 1.

In the embodiment shown in Figure 8 the blocks 5 and 5a (Figure 9) are detachable, which facilitates the supply and removal of the contents in the vessel.

Figure 7 is a schematic view showing the structure of the filter structure 14, wherein the reference numerals 12a to 12e denote metal net bodys which together constitute the unitary structure 12, which is surrounded by the reinforcement 13. Functionally the layer 12a of the finest mesh size acts as a filter whereas the others work as supports for the layer 12a and provide routes for allowing the liquid to pass through.

Referring to Figure 9 another preferred embodiment will be described:

There is provided a thermal insulating partition 17 between the vessel 1 and the filter structure 14, thereby preventing heat from transferring to the vessel 1, wherein the heat is likely to be generated on the inner surface of the filter structure 14. In the illustrated embodiment of filter structure 14 is provided in a lower section of the cylinder but it can be provided along the entire height thereof. When the filter structure 14 is provided in the lower section thereof as shown in Figure 9, there is provided an insulating spacer 19 between the vessel 1 and a high pressure chamber 18, thereby protecting the collected component from heat. In addition the filter structure 14 is firmly fixed to the position. The reference numerals 20 and 21 denote insulating members adapted to prevent heat from transferring to the main section of the equipment; preferably they are provided with filter members 20a and 21a, respectively. A plug 5a is made in one piece with the vessel 1, and other parts are detachably fixed to their positions so as to allow the solid cake to be readily collected.

The vessel is insulated against heat from the products in the cylinder, and particularly the transfer of heat in all directions from the filter structure 14 is prevented. This reduces the heat capacity of the filter structure 14 and is effective in avoiding the production of a temperature gradient between the inner surface of the filter structure and the central portion thereof. As a result the solid cake is kept at a constant temperature throughout. This leads to the high purity of the products. Under the conventional practice with the decrease in the temperature of the product sticking to the inner surface of the filter, constuents other than the desired one solidify, and results in (1) a reduced purity of the product and (2) reduction of filtering ability due to clogging of the inner surface of the filter. Under the present invention problems have been avoided or minimized.

For the insulating material, bakelite Trademark or epoxy resins can be selectively used but there is no limitation to the material if it has some elasticity, has a compressible strength and has a chemical resistivity to the treating component. The insulating material is variously shaped in accordance with the position at which it is located. Basically it is shaped so as to allow the liquid to pass therethrough and flow downward to the bottom of the apparatus. The thickness of the insulating material is determined in accordance with the operational condition. Alternatively it is possible to cover the reinforcement with an insulating film.

Next, the method of removing the liquid from the vessel to atmospheric pressure through the filter structure with the use of a nozzle will be described:

The liquid from the discharge pipe is exposed to a low pressure, but upstream of the nozzle a high pressure is maintained. Therefore the filtering operation can be finished while the solid phase can be kept at the high pressure. This is one advantage derived from the use of a nozzle of a divergent type. In general, when a squeezing force is applied to a solid and liquid coexisting phase so as to force out the mother liquid through the filter structure, a greater part of the mother liquid is caused to pass through the filter structure at the initial state of the squeezing process because there is no obstacle on and around the surface of the filter structure 14. As the squeezing continues, separated solids gather on the filter, thereby increasing the resistance to the filtering. Toward the end of the squeezing process the amount of the filtrate lessens considerably. In this way the amount of filtrate is reduced with time, which means that the amount of the liquid passing through the nozzle is gradually reduced. In the process of squeezing and filtering the high pressure chamber is full of separated solids, which gather on the surface of the filter structure and prevent the mother liquid from discharging therefrom. As a result the fresh solid cake is not sufficiently pure.

The inventors have devised means to control the high pressure in the process of squeezing and filtering so as to allow as much as possible of mother liquid to pass through the filter. Using this means, the amount of the high pressure liquid continues to reduce, and the discharge pressure continues to reduce from the start of squeezing up to the end thereof in an irregular manner.

Because of the complicated changes in resistivity of the high pressure liquid prior to filtering it is essential to control such varying resistances so as to achieve the desired results. One solution is to provide a control valve in the discharge line, whereby the resistance to liquid flow is controlled with time and pressure. However this method has disadvantages; for example, (1) the control of flow rate must be carried out in a short time, (2) the follow-up troubles due to changes in the liquid pressure and (3) troubles with the valve itself.

In order to overcome the problems pointed out above the inventors have arranged to use a divergent nozzle whereby the resistance or the rate of flow is controlled. The diameter of the nozzle is an important factor which affects the control of the flow rate. If it is too large the flow rate naturally becomes too large, thereby causing the separated fine crystals to flow out from the filter, and also leading to reduced pressure in the vessel (which means that the pressure for driving the piston becomes insufficient). To avoid the reduction of pressure it is required to use a great power. Whereas, if the diameter is too small the flow rate becomes too small, thereby prolonging the operation time for squeezing and filtering. It is important to determine an optimum diameter of the nozzle to be in accord with the progress of squeezing and filtering operation, which is evidence from the following equation:

$$V = a \sqrt{2gH}$$

whereing:

V: the rate of flow through the nozzle under pressure

a: coefficient

g: gravitational acceleration

H: the pressure of the liquid being discharged, expressed in terms of head

It will be understood from the above equation that it is required to select a nozzle in accordance with the rate of flow to be desired. In this case the maximum diameter depends on the capacity of the equipment to produce pressure, and more specifically, the hydraulic power must be such as to compensate for the reduction in pressure due to the flow of liquid. The diameter D of the nozzle is expressed by the following equation:

$$W \overset{>}{=} P \Delta V = P \cdot \frac{\pi}{4} D^2 V$$

$$\therefore D \leqq 2 \sqrt{\frac{W}{\pi \cdot P \cdot V}}$$

wherein:

W: the driving energy of the hydraulic pump

P: pressure

$\Delta V$: the amount of flow-of liquid per unit time

V: the rate of flow

By selecting a nozzle in accordance with the rate of flow desired the speed at which the separation is effected is adjusted. However it is troublesome to change the nozzles frequently and during this change liquid is lost, thereby resulting in the waste of liquid.

The inventors have provided an arrangement of a plurality of discharge pipes 17 as shown in Figure 10 in which three paths 17a, 17b and 17c are provided each including nozzles 23a, 23b and 23c having different diameters, respectively. The reference numerals 24a, 24b and 24c denote electromagnetic valves whereby the discharge path is automatically selected. The nozzle is selected by selecting the valve 24a, 24b and 24c in accordance with the flow rate to be desired. There are provided throttle valves 25a, 25b and 25c upstream of the nozzles 23a, 23b and 23c (if so desired, downstream thereof), which work in cooperation with the respective nozzles 23a, 23b and 23c. The reference numerals 26a, 26b and 26c denotes filters, whereby the nozzles are protected against clogging. The liquid ejected through the nozzle has a large kinetic energy, and it is necessary to attenuate the kinetic energy as soon as possible so as to secure operational safety.

Figure 11 shows an embodiment which includes ducts 31 provided downstream of the nozzles, the

8

ducts having a relatively large diameter with respect to that of each nozzle. The duct is designed to absorb the kinetic energy by friction between the flow of liquid and the inside wall of the duct, thereby reducing the rate of flow to a safety speed.

It is possible to add other auxiliary devices to the arrangement shown in Figure 10, and also to change the lengths of the ducts within the spirit of the invention. The diameter of the nozzle tends to enlarge by wear over a long period of use. Replacement is required but as the nozzle is a small component part the price is low and the replacement is easy. Thus without resort to the use of large-scale equipment, the withdrawal of the high pressure liquid to the low pressure section is optimally achieved.

Figure 12 shows an embodiment which incorporates a heating device located in the discharge path, which will be described in detail:

The reference character H denotes a heater of a sheath type located in the discharge paths 7 and 8 along the full length thereof. The heater H is inserted into the pipes 7 and 8 from a three-way coupling 27, wherein the terminating end of the heater H is electrically connected to the source of electricity directly or indirectly, that is, through the block 5. The other terminating end of the heater H is soldered to the three-way coupling 27, and a lead line is provided for connection to the source of electricity. The coupling 27 is also connectd to the valve V7 (Figure 1). A current constantly flows through the heater H, thereby keeping the paths 7 and 8 warm. This prevents the liquid flowing therethrough from solidifying, thereby avoiding clogging. Likewise a heater can be provided in the supply path 6, thereby preventing the supply liquid from solidifying. A pressure gauge can be provided in the section where no clogging is wanted, whereby the rise and drop in pressure is visually watched. A pressure gauge itself is essential to the use of the present apparatus but a high pressure acts within the pressure gauge, thereby causing the liquid flowing therethrough to solidify. When the liquid solidifies in the pressure gauge it becomes difficult to obtain accurate information about the pressure.

The present embodiment has solved this problem. Referring to Figure 13 the solution will be described in detail: The reference numeral 28 denotes a pressure gauge unit which includes a heater of sheath type fixed by a fixing member 29, and the reference numeral 30 denotes strain gauge designed to detect the pressure.

In this way sheath type heaters are provided in the section where solidifying of liquid is not desired. The arrangement of heaters can be used in association with the pressure separation equipment of the invention, thereby providing increased efficiency. Since the heaters are of a sheath type there is no difficulty in providing them. The heaters are provided in the liquid paths alone, thereby avoiding heating the entire equipment, particularly the chamber where the separation takes place.

As is evident from the foregoing description the filter structure is protected against becoming damaged in the process of squeezing and filtering after the segregation has taken place, thereby separating the separated component from the remaining liquid. Because of the facility and operational economy, the pressure separation equipment of the present invention is applicable to industrial purposes.

## Claims

1. Apparatus for use in separating a required material from a mother liquid including at least the required material, by crystallization of that material in the liquid under high pressure, and then separating the crystallized reqired material from the liquid comprising:-

a generally cylindrical pressure vessel (1) having means (6) for supplying the solution to the vessel; piston means (4) for raising the pressure of liquid and material therein to a level sufficient to cause crystallization of the material to be separated; and means (7) for discharging the liquid from the pressure vessel;

filter means (14) disposed around the inner surface of the cylindrical wall of the pressure vessel and arranged to retain crystallized material in the pressure vessel while allowing the liquid to pass through to be discharged from the pressure vessel; and

passage means (15,16) for the flow of liquid from the outside of the filter means to the means for discharging it from the pressure vessel;

characterised in that

said filter means (14) comprises a filter element sleeve (12) and a reinforcing sleeve (13) for the filter sleeve; the reinforcing sleeve is formed with a flow path (15a) for mother liquid to be discharged from the filter element sleeve (12) and is a close fit within the cylindrical wall of the pressure vessel so that radial expansion of the filter means under said high pressure when in use is resisted by the wall of the pressure vessel; said filter element sleeve (12) is formed with an innermost metal mesh filter layer (12a) and one or more outer metal mesh filter support layers (12b, 12c, 12d, 12e), said metal mesh layers being attached together substantially over the whole filter surface by sintering their meshes together; and in that said filter sleeve element is joined at its ends to the ends of the reinforcing sleeve (13) whereby the filter element sleeve (12) is axially fixed in said reinforcing sleeve.

2. Apparatus as claimed in Claim 1, characterised in that said reinforcing sleeve fits (13) in said cylindrical wall with a radial gap of 0.1 mm or less.

3. Apparatus as claimed in Claim 1, characterised in that said filter means (14) is axially tapered in cross-section, and a correspondingly tapered thickness spacer sleeve (11) is interposed between the filter means and the cylindrical wall.

4. Apparatus as claimed in Claim 1, characterised in that an insulating sleeve (17) is interposed between the filter means and the cylindrical wall.

5. Apparatus as claimed in Claims 3 and 4, characterised in that said insulating sleeve (17) forms said spacer sleeve (11).

6. Apparatus as claimed in any preceding claim, characterised in that said filter element sleeve (12) is attached to said reinforcing sleeve (13) substantially over the whole filter surface by sintering the meshes of the outer most support layer (12c) to the reinforcing sleeve

7. Apparatus as claimed in any preceding claim, characterised in that said means (7) for discharging the liquid from the vessel includes a discharge path having a nozzle arrangement (23a,23b,23c) to control the flow through the discharge path so as to maintain pressure in the pressure vessel during extraction.

8. Apparatus as claimed in Claim 7, characterised in that said discharge path is provided with electrical heating means (H).

**Revendications**

1. Dispositif pour la séparation d'un matériau requis à partir d'un liquide-mère comprenant au moins le matériau requis par cristallisation de ce matériau dans le liquide sous haute pression puis par séparation du matériau requis cristallisé du liquide, dispositif comprenant :
   - un récipient sous pression (1) de forme globale cylindrique muni d'un moyen (6) pour alimenter la solution dans le récipient, un piston (4) pour élever la pression du liquide et du matériau à un niveau suffisant pour entraîner la cristallisation du matériau à séparer et un moyen (7) de décharge du liquide du récipient sous pression;
   - un filtre (14) placé autour de la surface interne de la paroi cylindrique du récipient sous pression et prévu pour retenir le matériau cristallisé dans le récipient sous pression tout en permettant le passage du liquide à décharger du récipient sous pression et
   - des moyens de passage (15, 16) pour l'écoulement du liquide de l'extérieur du filtre vers le moyen de décharge du récipient sous pression,
   dispositif caractérisé en ce que ledit filtre (14) comprend un manchon de filtration (12) et un manchon de renforcement (13) pour le manchon de filtration, en ce que le manchon de renforcement est muni d'un circuit d'écoulement (15a) du liquide-mère à décharger du manchon de filtration (12) et est monté juste dans la paroi cylindrique du récipient sous pression de façon à ce qu'une dilatation radiale du filtre sous ladite haute pression en utilisation soit contrée par la paroi du récipient sous pression, en ce que ledit manchon de filtration (12) est formé d'une couche interne de filtration (12a) à mailles métalliques et d'une ou de plusieurs couches externes de support de filtre (12b à 12e) à mailles métalliques, lesdites couches à mailles métalliques étant solidarisées sur à peu près toute la surface du filtre par frittage mutuel de leurs mailles et en ce que ledit manchon de filtration (12) est joint à ses extrémités aux extrémités du manchon de renforcement (13), le manchon de filtration (12) étant ainsi fixé axialement dans ledit manchon de renforcement.

**2.** Dispositif selon la revendication 1, caractérisé en ce que ledit manchon de renforcement (13) s'adapte dans ladite paroi cylindrique avec un intervalle radial de 0,1 mm ou moins.

**3.** Dispositif selon la revendication 1, caractérisé en ce que ledit filtre (14) est conique axialement en section droite et une entretoise d'épaisseur conique correspondante (11) est interposée entre le filtre et la paroi cylindrique.

**4.** Dispositif selon la revendication 1, caractérisé en ce qu'un manchon d'isolation (17) est interposé entre le filtre et la paroi cylindrique.

**5.** Dispositif selon la revendication 3 ou 4, caractérisé en ce que ledit manchon d'isolation (17) forme ledit manchon d'espacement.

**6.** Dispositif selon l'une quelconque des revendications précédentes, caractérisé en ce que ledit manchon de filtration (12) est fixé audit manchon de renforcement (13) sur à peu près toute la surface du filtre par frittage des mailles de la couche de support la plus externe (12c) avec le manchon de renforcement.

**7.** Dispositif selon l'une quelconque des revendications précédentes, caractérisé en ce que ledit moyen (7) de décharge du liquide du récipient comprend un circuit de décharge muni d'une buse (23a, 23b 23c) pour commander le débit dans le circuit de décharge de façon à maintenir la pression dans le récipient sous pression pendant l'extraction.

**8.** Dispositif selon la revendication 7, caractérisé en ce que ledit circuit de décharge est muni d'un moyen de chauffage électrique (H).

**Patentansprüche**

**1.** Vorrichtung zur Anwendung beim Abtrennen eines benötigten Materials von einer Mutterlauge, die mindestens das benötigte Material enthält, durch Auskristallisieren dieses Materials in der Lauge unter hohem Druck und nachheriges Abtrennen des auskristallisierten benötigten Materials von der Lauge mit

einem im allgemeinen zylinderförmigen Druckbehälter (1), der eine Einrichtung (6) für die Zuführung der Lösung zu dem Behälter; eine Kolbeneinrichtung (4) für die Erhöhung des Druckes der Lauge und des darin enthaltenen Materials auf einen Wert, der ausreicht, um ein Auskristallisieren des abzutrennenden Materials zu bewirken; und eine Einrichtung (7) zum Ablassen der Lauge aus dem Druckbehälter aufweist;

einer Filtereinrichtung (14), die um die innere Oberfläche der zylinderförmigen Wand des Druckbehälters herum angeordnet und dafür bestimmt ist, auskristallisiertes Material in dem Druckbehälter zurückzuhalten, während der Lauge erlaubt wird, hindurchzugehen, um aus dem Druckbehälter abgelassen zu werden; und

einer Durchgangseinrichtung (15, 16) für den Strom der Lauge von der Außenseite der Filtereinrichtung zu der Einrichtung zu ihrem Ablassen aus dem Druckbehälter;

**dadurch gekennzeichnet,** daß

die Filtereinrichtung (14) aus einer Filterelementhülse (12) und einer Verstärkungshülse (13) für die Filterhülse besteht; die Verstärkungshülse mit einem Strömungsweg (15a) für Mutterlauge, die aus der Filterelementhülse (12) abzulassen ist, ausgebildet ist und innerhalb der zylinderförmigen Wand des Druckbehälters eng eingepaßt ist, so daß einer radialen Ausdehnung der Filtereinrichtung unter dem hohen Druck während ihrer Anwendung durch die Wand des Druckbehälters ein Widerstand entgegengesetzt wird; die Filterelementhülse (12) mit einer innersten Streckmetall- bzw. Metallnetz-Filterschicht (12a) und einer oder mehr als einer äußeren Streckmetall- bzw. Metallnetz-Filterträgerschicht (12b, 12c, 12d, 12e) ausgebildet ist, wobei die Streckmetall- bzw. Metallnetzschichten im wesentlichen über die gesamte Filteroberfläche durch Zusammensintern ihrer Maschen aneinander befestigt sind; und daß die Filterelementhülse (12) an ihren Enden mit den Enden der Verstärkungshülse (13) verbunden ist, wodurch die Filterelementhülse (12) in der Verstärkungshülse axial festgemacht wird.

2. Vorrichtung nach Anspruch 1, dadurch gekennzeichnet, daß die Verstärkungshülse (13) mit einem radialen Zwischenraum von 0,1 mm oder weniger in die zylinderförmige Wand eingepaßt ist.

3. Vorrichtung nach Anspruch 1, dadurch gekennzeichnet, daß sich der Querschnitt der Filtereinrichtung (14) axial verjüngt und zwischen der Filtereinrichtung und der zylinderförmigen Wand eine Abstandshülse (11) mit sich entsprechend verjüngender Dicke eingefügt ist.

4. Vorrichtung nach Anspruch 1, dadurch gekennzeichnet, daß zwischen der Filtereinrichtung und der zylinderförmigen Wand eine Dämmhülse (17) eingefügt ist.

5. Vorrichtung nach Ansprüchen 3 und 4, dadurch gekennzeichnet, daß die Dämmhülse (17) die Abstandshülse (11) bildet.

6. Vorrichtung nach einem der vorhergehenden Ansprüche, dadurch gekennzeichnet, daß die Filterelementhülse (12) durch Ansintern der Maschen der äußersten Trägerschicht (12e) an die Verstärkungshülse (13) im wesentlichen über die gesamte Filteroberfläche an der Verstärkungshülse befestigt ist.

7. Vorrichtung nach einem der vorhergehenden Ansprüche, dadurch gekennzeichnet, daß die Einrichtung (7) zum Ablassen der Lauge aus dem Behälter einen Ablaßweg enthält, der eine Düsenanordnung (23a, 23b, 23c) hat, um den Strom, der durch den Ablaßweg hindurchgeht, derart zu steuern, daß in dem Druckbehälter während des Ausziehens Druck aufrechterhalten wird.

8. Vorrichtung nach Anspruch 7, dadurch gekennzeichnet, daß der Ablaßweg mit einer elektrischen Heizeinrichtung (H) versehen ist.

1

8

9

10

17a    24a    25a    26a    23a

17b    24b    25b    26b    23b

17c    24c    25c    26c    23c

11

31

12

13